Europäisches Patentamt

European Patent Office

Office européen des brevets

(19)

(11) Publication number: **0 300 816**
A2

(12)

# EUROPEAN PATENT APPLICATION

(21) Application number: 88306765.4

(22) Date of filing: 22.07.88

(51) Int. Cl.⁴: **B 64 C 11/34**

(30) Priority: 23.07.87 GB 8717437

(43) Date of publication of application:
25.01.89 Bulletin 89/04

(84) Designated Contracting States:
AT BE CH DE ES FR GB GR IT LI LU NL SE

(71) Applicant: Robinson, Ernest
c/o Hornet Microlights Perseverance Mill off Beacon Road
Wibsey Bradford West Yorkshire, BD1 1QB (GB)

(72) Inventor: Robinson, Ernest
c/o Hornet Microlights Perseverance Mill off Beacon Road
Wibsey Bradford West Yorkshire, BD1 1QB (GB)

(74) Representative: Wharton, Peter Robert et al
P. R. Wharton & Co. Alliance House 29-31 Kirkgate
Bradford West Yorkshire, BD1 1QB (GB)

(54) Propellor.

(57) A propellor attachment 10 comprises a collar 34 for engaging a propellor 36 located within a housing 22. The housing 22 is movable against resilient biassing means 30 when the propellor develops sufficient thrust. Motion of the housing 22, by means of a rod 32 contacting a flange 38 on the collar, effects rotation of the collar 34 thereby altering the pitch of the propellor. The force required to overcome the biassing means 30 is set approximately midway between the thrust required for climbing and the thrust required for cruising. The propellor therefore automatically takes up the required pitch for take off/climb conditions and cruising conditions.

EP 0 300 816 A2

## Description

## PROPELLOR

This invention relates to aircraft propellors, and more particularly to a variable pitch propeller for a so-called microlight aircraft.

The optimum pitch of the propellor of an aircraft varies according to the nature of the flight. When an aircraft is taking off, for example, and a relatively steep climb is required, the propellor blades need to have a fine pitch. However, when the aircraft is cruising at a constant altitude it is preferred for the propellor blades to have a coarse pitch for reasons of economy. With conventional aircraft the change in pitch of the propellor is achieved by hydraulic means. However, microlight aircraft are usually powered by two-stroke engines which do not have an oil pump, since there is no oil circulation in the engine. The pitch of the propellor cannot therefore be altered hydraulically without considerable difficulty and expense. Consequently microlight aircraft are presently fitted with either a coarse pitch or a fine pitch propellor, depending on whether a steep climb is required at take off, or a compromise between the two. Clearly none of these alternatives are ideal since the performance of the aircraft cannot be optimum at all stages of a flight.

It is intended that the present invention should overcome or reduce the above disadvantages.

According to the present invention there is provided a propellor attachment comprising a collar for engaging the propellor located in a housing, the housing being movable against resilient biassing means when the propellor develops sufficient thrust, whereby motion of said housing effects rotation of the collar thereby altering the pitch of the propellor.

A propellor attachment in accordance with the invention is intended for so-called microlight aircraft, although it could also be used on conventional light aircraft just as effectively.

Preferably the propellor attachment is attached to the drive shaft of a motor by means of an associated flange plate.

The propellor attachment preferably comprises an upper plate and a lower plate which are joined by means of a plurality of elongate bolts. These bolts may also serve to fix the propellor attachment to the flange plate. The housing is preferably located between the two plates and is freee to slide on the elongate bolts. The resilient biassing means may be springs located on each elongate bolt between the housing and the lower plate.

Preferably a rod is fixed to the lower plate and extends into the housing where it is engageeable with a flange on the collar located adjacent the end of the rod so that when the housing moves towards the lower plate, the end of the rod contacts the flange and causes the collar to rotate.

The invention will now be described further, by way of example only, with reference to and as illustrated in the accompanying drawings in which:

Figure 1 is a schematic illustration of a propellor attachment in accordance with the invention; and

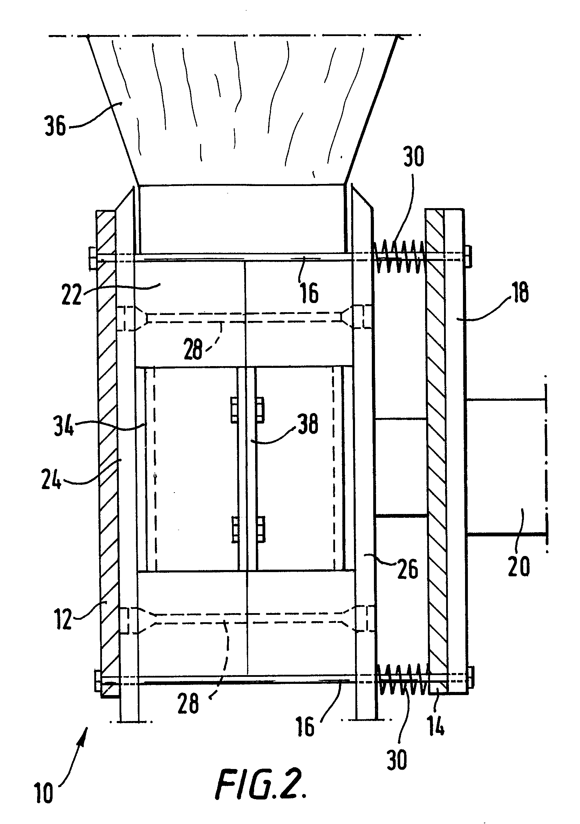

Figure 2 is a view along line X-X in figure 1.

Referring to the drawings, a propellor attachment 10 comprises an upper plate 12 and a lower plate 14 which are connected by means of elongate bolts 16. These bolts 16 also serve to fix the propellor attachment 10 to a flange plate 18 of a drive shaft 20. A housing 22 comprises an upper member 24 and a lower member 26 which are connected by struts 28, said housing being slidable on bolts 16. Springs 30 are located on the bolts 16 between the lower member 26 of the housing and the lower plate 14. A rod 32 is fixed to the lower plate 14 and extends through the lower member 26 into the housing 22. A collar 34 is situated in the housing and this grips the centre of a propellor 36. The collar 34 has a flange 38 located adjacent the end of the rod 32.

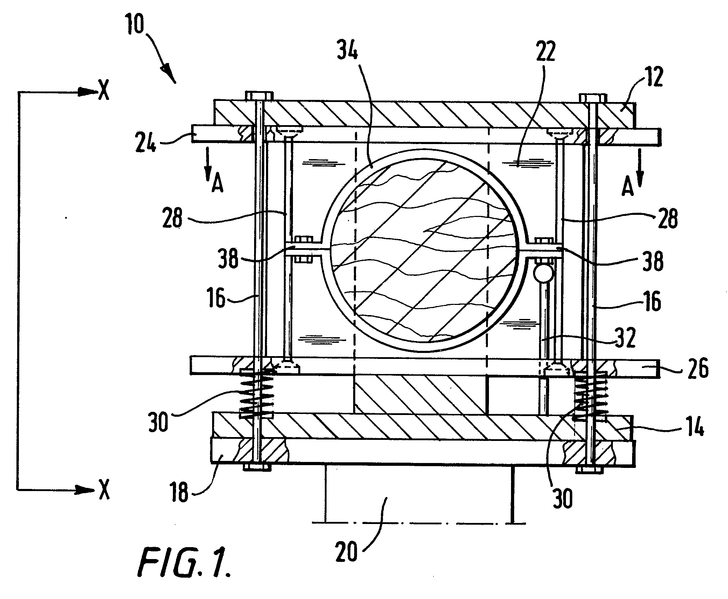

When a microlight aircraft takes off, the propellor must develop sufficient thrust to achieve take off. For a typical microlight aircraft the maximum thrust is approximately 320 LBS. However, when flying at a constant altitude the thrust developed by the propellor may be reduced to about 240 LBS. The springs 30 are designed so that they will only compress when a certain pre-determined force is applied thereon which is conveniently midway between the above two values, say 280 LBS. Consequently when the aircraft is in the process of taking off and the necessary thrust is developed by the propellor, the housing 22 will move towards the lower plate 14 in the direction of arrows A (since the propellor is situated at the rear of the aircraft) thereby compressing springs 30. This will cause flange 38 to contact the distal end of the rod 32 which causes collar 34 to rotate anti-clockwise. This rotation of the collar 34 gives the propellor blades a fine pitch which is ideal for take off and a steep climb. When the aircraft has levelled off and the thrust on the propellor is reduced (to say 240 LBS), the springs 30 overcome the thrust and return the housing 22 to the position shown in figure 1. The rod 32 is then no longer in contact with the flange 38 which allows the collar 34 to also return to the position shown in figure 1 which once again gives the propellor blades a coarse pitch, which is ideal for cruising. The collar 34 naturally returns to this position due to the thrust from the propellor.

A distinct advantage of the invention is that it allows the pitch of an aircraft propellor to be varied automatically thereby ensuring that the performance of the aircraft is optimum at all times, without requiring complicated and expensive hydraulic means.

## Claims

1. A propellor attachment for an aircraft which comprises a collar for engaging the propellor located in a housing collar the housing being

**0 300 816**

movable against resilient biassing means when the propellor develops sufficient thrust, whereby motion of said housing effects rotation of the collar thereby altering the pitch of the propellor.

2. An attachment as claimed in claim 1 comprising an upper plate and lower plate joined by means of a plurality of elongate bolts.

3. An attachment as claimed in claim 2 connected to the drive shaft of a motor by means of the said elongate bolts.

4. An attachment as claimed in claim 3 in which the housing is located between the two plates and is free to slide on the elongate bolts.

5. An attachment as claimed in claim 4 in which the resilient biassing means comprise springs located on each elongate bolt between the housing and the lower plate.

6. An attachment as claimed in claim 5 in which a rod is fixed to the lower plate and extends into the housing where it is engageable with a flange on the collar located adjacent the end of the rod so that when the housing moves towards the lower plate the end of the rod contacts the flange and causes the collar to rotate.

7. An attachment as claimed in any of claims 1 to 6 in which the biassing means may be overcome by a thrust approximately midway between that required for climbing and that required for cruising.

FIG.1.

FIG.2.